Europäisches Patentamt

European Patent Office

Office européen des brevets

(11) Numéro de publication : **0 320 383 B1**

(12) **FASCICULE DE BREVET EUROPEEN**

(45) Date de publication du fascicule du brevet :
**15.04.92 Bulletin 92/16**

(51) Int. Cl.$^5$ : **B62D 53/06, B62D 53/08**

(21) Numéro de dépôt : **88403112.1**

(22) Date de dépôt : **08.12.88**

(54) **Perfectionnements aux dispositifs utilisant un bissel pour le renforcement de la capacité de chargement de véhicules tracteurs.**

(30) Priorité : **10.12.87 FR 8717212**

(43) Date de publication de la demande :
**14.06.89 Bulletin 89/24**

(45) Mention de la délivrance du brevet :
**15.04.92 Bulletin 92/16**

(84) Etats contractants désignés :
**AT BE CH DE ES GB GR IT LI LU NL SE**

(56) Documents cités :
**WO-A-81/02554**
**FR-A- 2 418 138**
**US-A- 4 033 426**

(73) Titulaire : **A.C.T.M.**
**Avenue de Rochemaure**
**F-26200 Montélimar (FR)**

(72) Inventeur : **Ayme, Jacques**
**Petit Chemin de Saillans**
**F-26200 Montelimar (FR)**

(74) Mandataire : **Hud, Robert**
**Cabinet COLLIGNON 6, rue de Madrid**
**F-75008 Paris (FR)**

EP 0 320 383 B1

**Description**

On connaît un moyen de renforcement de la capacité de chargement d'un véhicule tracteur pour lui permettre de s'atteler sous une semi-remorque de transport de charges lourdes, consistant en l'adjonction d'un bissel qui est lui-même semblable à une semi-remorque très courte venant s'atteler sur le véhicule tracteur. Le bissel reçoit à son tour en son centre, par le moyen d'un second système d'attelage, la partie avant de la semi-remorque de transport de charges lourdes.

On obtient ainsi un ensemble de trois éléments successifs articulés deux par deux autour d'un axe vertical, comprenant donc deux points d'articulation généralement réalisés au moyen de coupleurs d'attelage automatiques.

Selon un mode de réalisation connu, les roues de bissel ne sont pas directrices. Le bissel roule dans les traces du tracteur quand l'ensemble circule en ligne droite et il serre vers l'intérieur du tournant quand l'ensemble s'inscrit dans une courbe. Les marches arrière sont possibles, mais elles font appel à l'habileté du conducteur.

Selon un mode de réalisation amélioré connu, les roues du bissel sont directrices à partir d'un système de commande dite "indépendante" qui n'est généralement utilisé que pour des manoeuvres particulières et notamment en marche arrière, car il nécessite la présence d'un conducteur particulier, préposé à cette commande.

Selon d'autres modes de réalisation connus les roues du bissel sont directrices à partir d'un système de commande dite "automatique" ne nécessitant donc pas de conducteur. Ces systèmes sont tous basés sur la détection de l'angle relatif, autour de l'axe vertical de l'articulation entre le bissel et le tracteur, qui se forme en courbe et qui s'accroît en fonction inverse du rayon de la courbe. Ils sont généralement conçus pour faire suivre aux roues du bissel la trace des trains de roues non directrices du tracteur.

Ces systèmes connus ne fonctionnent pas en marche arrière, car alors plus la courbe d'évolution diminue, plus l'angle augmente ce qui entraîne l'augmentation de l'angle des roues directrices du bissel, ayant à son tour pour effet, en marche arrière, de réduire encore la courbe d'évolution du bissel qui se met donc rapidement en travers du tracteur. Il faut alors, pour réaliser une marche arrière, prévoir également une deuxième commande de direction du bissel, dite indépendante, et passer de la direction automatique à la direction indépendante. Il est à noter que les manoeuvres en marche arrière sont importantes sur les ensembles articulés pour le transport des charges lourdes, car très souvent la semi-remorque elle-même a sa partie avant en col de cygne découplable de son plateau pour permettre le chargement aisé de la charge et il faut ensuite reculer la partie avant pour procéder au réaccouplement.

Il est encore à noter que pour certaines manoeuvres, le conducteur du tracteur désire braquer sur place, ce qu'il peut faire avec les roues directrices de son tracteur mais alors les roues directrices du bissel ne bougent pas, et ce n'est que lorsque le tracteur avancera que le processus : formation de la courbe d'évolution du tracteur au sol, formation de l'angle relatif entre le bissel et le tracteur puis braquage de roues du bissel, se déroulera. Ce retard peut être préjudiciable en regard de la manoeuvre désirée.

Le document FR-A-2 418 138 décrit un camion-remorque, c'est-à-dire un camion à l'arrière duquel est attachée une remorque. L'avant-train de la remorque est attelé au camion par une flèche d'attelage qui comporte avec celui-ci une liaison articulée autour d'un axe horizontal et qui est articulée sur l'avant-train de la remorque également selon un axe horizontal. Un organe pivotant monté sur le camion, au voisinage du dispositif d'accouplement, vient coiffer la flèche d'attelage de façon à rendre rigide dans un plan horizontal l'accouplement entre le camion et la remorque.

La présente demande de brevet a pour objet un dispositif de direction automatique des roues d'un bissel, et elle se caractérise en ce que ce dispositif comprend des moyens de commande automatique des roues du bissel qui sont tels que les valeurs de braquage obtenues aux roues directrices du bissel maintiennent l'axe longitudinal du bissel sensiblement dans l'alignement de l'axe longitudinal du tracteur, tant en ligne droite, qu'en courbe et tant en marche avant qu'en marche arrière. Le maintien de cette configuration alignée tant en ligne droite qu'en courbe a pour effet de conférer à l'ensemble constitué par le tracteur et le bissel reliés selon une articulation par un coupleur d'attelage, les caractéristiques d'évolution sur route d'un tracteur seul qui aurait les dimensions totales et la capacité de charge totale de ses deux éléments constitutifs reliés entre eux. On comprend que cette réduction de deux véhicules en un seul, en ce qui regarde les caractéristiques de commande de direction et les caractéristiques d'évolution sur la route, présente des avantages d'utilisation par rapport aux conceptions basées sur la rotation effective du bissel autour de l'axe vertical reliant celui-ci au tracteur. Ainsi l'ensemble articulé pour transport de charges lourdes constitué de trois éléments (tracteur, bissel et semi-remorque) s'articulant autour de deux axes verticaux se comporte en fait comme un ensemble articulé qui serait constitué de deux éléments seulement : un sous-ensemble tracteur et une semi-remorque avec une seule articulation verticale qui soit sollicitée, l'autre articulation verticale ne fonctionnant plus que selon des angles $\alpha$ de très faibles valeurs, de l'ordre de $\pm 2°$.

Selon une première forme d'exécution du dispositif selon l'invention, les moyens pour la commande automatique de la direction des roues du bissel asservissent ces dernières à la direction des roues du tracteur. A cet effet, ces moyens comprennent principalement un étage pilote ayant pour fonction de détecter l'information relative à la grandeur du déplacement de direction des roues du tracteur, et de transmettre cette information à un système de force situé sur le bissel et capable d'orienter les roues directrices de celui-ci. Les moyens de transmission de l'information par l'étage pilote peuvent être de tous types appropriés connus, par exemple mécaniques, électriques, hydrostatiques ou pneumatiques.

La direction automatique des roues du bissel à partir des mouvements d'orientation des roues directrices du tracteur ne détecte pas l'angle résiduel de défaut d'alignement de l'axe longitudinal du bissel avec celui du tracteur, qui résulte des imperfections pratiques du système. Si ce défaut tend à s'annuler en marche avant, par contre il s'accroît en marche arrière. Pour remédier à cet inconvénient on prévoit, selon l'invention, d'adjoindre au dispositif un système complémentaire, n'agissant qu'en marche arrière, qui mesure l'angle de défaut d'alignement et apporte, dans l'étage pilote de direction automatique des roues du bissel, une correction qui est fonction de cette mesure. Cette correction s'ajoute algébriquement à la consigne générale d'orientation des roues du bissel donnée par la position des roues du tracteur.

Selon une autre forme d'exécution du dispositif selon l'invention, la commande de la direction des roues du bissel s'effectue, dans tous les modes de fonctionnement, à partir de la détection des petits déplacements angulaires relatifs entre le bissel et le tracteur, résultant de défauts d'alignement entre leurs axes longitudinaux respectifs. Les moyens de détection des petits déplacements angulaires entre le bissel et le tracteur, ainsi que de transmission de cette information à la commande des roues du bissel, peuvent être de tous types appropriés connus, par exemple mécaniques, électriques ou autres.

Dans le cas de la marche arrière le sens des angles à donner aux roues du bissel doit être inversé pour maintenir l'axe longitudinal du bissel sensiblement dans le prolongement de celui du tracteur. Pour cela on prévoit, selon l'invention, un dispositif qui inverse automatiquement le sens d'actionnement de la direction des roues du bissel lors du fonctionnement en marche arrière.

Pour bien faire comprendre le dispositif selon l'invention on en décrira ci-après, à titre d'exemples sans caractère limitatif, deux formes d'exécution ainsi que des variantes en référence au dessin schématique annexé dans lequel :

la figure 1 est une vue en élévation partielle d'un ensemble routier articulé, montrant le tracteur, le bissel et la partie avant en forme de col de cygne de la remorque ;

la figure 2 est une vue en plan correspondant à la figure 1 ;

la figure 3 est une vue d'ensemble d'une première forme d'exécution d'un dispositif selon l'invention asservissant la direction des roues du bissel aux mouvements de direction des roues du tracteur, la transmission de l'information de mouvement étant réalisée mécaniquement ; la partie d'équipement sur tracteur étant représentée en élévation tandis que la partie d'équipement sur bissel est représentée en plan;

la figure 4 est une vue d'ensemble, analogue à la figure 3, d'une variante du dispositif de cette figure, la transmission de l'information de mouvement se faisant par signal électrique modulé ;

la figure 5 est une vue en élévation partielle du bissel attelé sur le tracteur et montrant un système complémentaire optionnel qui assure une limitation élastique des mouvement angulaires de désalignement entre le tracteur et le bissel ;

la figure 6 est une vue en plan correspondant à la figure 5 ;

la figure 7 est une vue en plan d'une variante du système de limitation élastique ;

la figure 8 est une vue en plan d'une autre variante du système de limitation élastique ;

la figure 9 est une coupe verticale prise selon la ligne IX-IX de la figure 8 ;

la figure 10 est, à plus grande échelle, une vue en plan d'un dispositif complémentaire à celui représenté à la figure 3 et nécessaire pour opérer des marches arrière ;

la figure 11 est une vue en plan d'une seconde forme d'exécution d'un dispositif selon l'invention, asservissant la direction des roues du bissel aux mouvements angulaires de désalignement entre le tracteur et le bissel, la transmission de la détection de mouvement se faisant mécaniquement ;

la figure 12 est, à plus grande échelle, une vue en coupe verticale prise selon la ligne XII-XII de la figure 11 ; et

la figure 13 est une vue en plan d'une variante du dispositif représenté à la figure 11, la transmission de la détection de mouvement se faisant par signal électrique modulé.

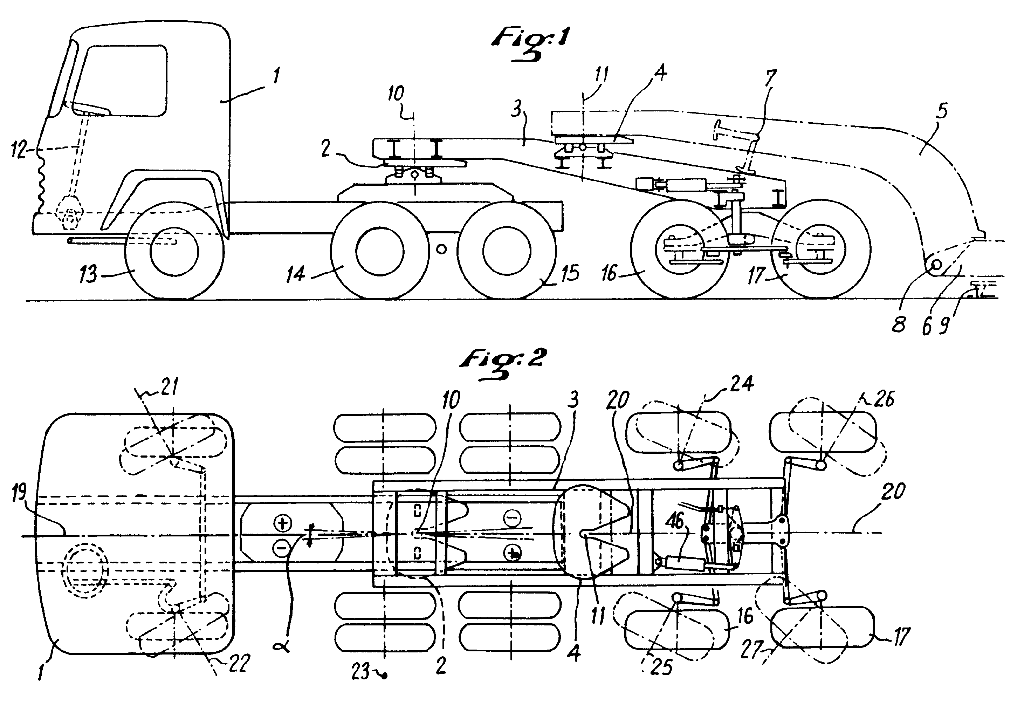

En référence aux figures 1 et 2, on a représenté partiellement un ensemble routier articulé, utilisé généralement pour le transport de charges lourdes. Cet ensemble comprend un tracteur 1 équipé d'un coupleur automatique d'attelage 2 sur lequel vient s'articuler, autour d'un axe vertical 10, une sorte de semi-remorque très courte 3 appelée bissel, reposant sur le sol par des trains de roues directrices 16,17. Le bissel 3 est également équipé, dans sa partie centrale, d'un coupleur automatique d'attelage 4 sur lequel vient s'articuler, autour d'un axe vertical 11, la partie avant 5 en forme de col de cygne d'une semi-remorque avec châssis 6. Les trains de roues de la semi-remorque étant situés vers l'extrémité arrière de celle-ci, ils ne sont pas représentés aux figures 1 et 2.

La semi-remorque représentée, destinée au transport de charges lourdes, comprend un col de cygne 5 qui est détachable du châssis 6 formant plateau par le moyen d'une broche 8. L'avant du châssis 6 est alors appuyé au sol par un système de béquilles 9 représenté en traits pointillés à la figure 1. Le col de cygne 5, détaché du châssis 6 de la semi-remorque, est alors entièrement supporté par le bissel 3 au moyen du coupleur d'attelage 4 d'une part et d'une béquille 7 rabattue, d'autre part. L'intérêt du col de cygne détachable est de faciliter le chargement des masses lourdes sur le châssis-plateau 6. Le rattachement du col de cygne 5 au châssis-plateau 6 est d'autant plus aisé à réaliser que les capacités évolutives de l'ensemble constitué par le tracteur 1 et le bissel 3, en marche arrière et en marche avant, sont meilleures ce qui est obtenu avec le dispositif selon l'invention.

Le dispositif selon l'invention a pour objet de réaliser une direction des roues 16, 17 du bissel 3 de telle façon que dans les différentes hypothèses possibles : circulation en ligne droite, en courbes, marche avant et marche arrière, l'axe longitudinal 20 du bissel 3 reste sensiblement dans l'alignement du prolongement de l'axe longitudinal 19 du tracteur 1.

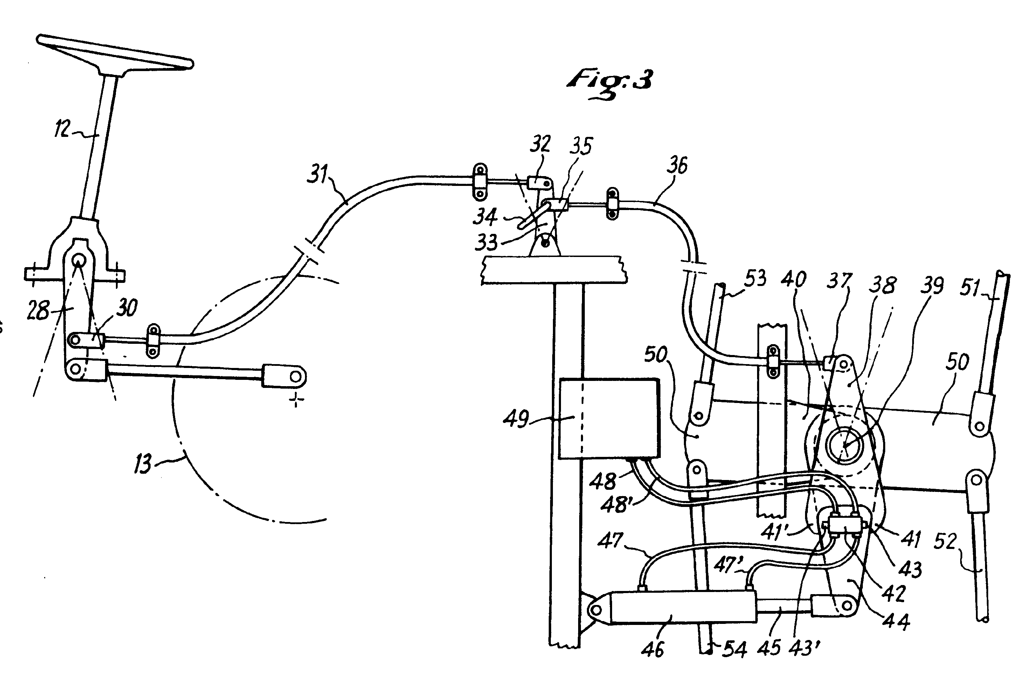

Selon une première forme d'exécution du dispositif selon l'invention représentée à la figure 3, celui-ci comprend des moyens reliant la direction des roues 16, 17 du bissel 3 à la direction 12 des roues directrices 13 du tracteur 1. Le dispositif comporte principalement un étage "pilote" dont la fonction est de transmettre l'information relative à la grandeur du déplacement de direction des roues 13 du tracteur 1 à un système de force (actionneur) situé sur le bissel 3 et capable d'orienter les roues directrices 16, 17 de celui-ci. Cet étage pilote comprend une tige d'acier flexible sous gaine 31 dont une extrémité est reliée par une chape 30 à un levier 28 de la direction 12 des roues 13 du tracteur 1. La tige flexible 31 se prolonge jusqu'à l'arrière du tracteur 1 pour être reliée à son autre extrémité, par une chape 32, à une biellette 33 articulée sur le châssis du tracteur 1. Une autre tige flexible sous gaine 36 est disposée sur le bissel 3, elle comporte à l'avant une chape 35 qui s'attache à la biellette 33 sur le tracteur par le moyen d'un axe-broche 34 et se termine à l'arrière du bissel 3 par une chape 37 la reliant à une bielle pilote 38 tournant librement sur un arbre 39, monté sur le châssis de bissel 3 par le moyen de paliers 40. La bielle pilote 38 se termine à son autre extrémité par une fourchette dont les deux doigts 41 et 41' viennent se placer de part et d'autre d'un distributeur pilote hydraulique progressif 42 muni de deux poussoirs 43 et 43' de déplacement du tiroir du distributeur.

L'étage "force" du dispositif comprend une bielle 44 sur laquelle est fixé le distributeur 42, cette bielle étant calée sur l'arbre 39. Une bielle double 50 est également calée sur l'arbre 39 dans sa partie inférieure. La bielle 50 reçoit en ses extrémités les chapes à axes de quatre barres 51, 52, 53 et 54 qui commandent respectivement l'orientation des quatres roues des trains de roues 16 et 17 du bissel 3. Le distributeur 42 est relié par des flexibles 48 et 48' à une centrale génératrice d'huile sous pression 49, disposée sur le bissel 3 (elle pourrait également être disposée sur le tracteur 1 afin d'avoir alors sa pompe entraînée par le moteur du tracteur). Le distributeur 42 est également relié par des flexibles 47 et 47' aux deux chambres d'un vérin actionneur à double effet 46 dont la tige 45 est précisément reliée par une chape et un axe à l'extrémité de la bielle 44 qui supporte le corps du distributeur 42.

Avec cette disposition, tout déplacement de la bielle pilote 38, lui-même commandé par tout déplacement du levier 28 de la direction 12 du tracteur 1, entraîne un déplacement parallèle de la bielle de force 44, selon le principe de fonctionnement dit "de la marche en suiveur". En effet, si le doigt de fourchette 41 de la bielle pilote 38 qui se déplace vient appuyer sur le poussoir 43 du distributeur 42, celui-ci enverra de l'huile sous pression à travers le flexible 47' dans la chambre côté tige 45 du vérin 46 ce qui aura pour effet de tirer sur la bielle 44 qui porte le corps de distributeur 42 jusqu'à ramener celui-ci en position centrale par rapport à son tiroir, c'est-à-dire jusqu'à ce que la bielle 44 supportant le distributeur soit à nouveau orientée dans l'alignement de la bielle pilote 38 qui est elle-même soumise aux déplacements du levier 28 de la direction 12 des roues du tracteur. On comprend que si le conducteur du tracteur poursuit son action de direction dans un sens ou dans l'autre, le système "force" d'orientation des roues du bissel 3 suit ce mouvement en parallèle selon le sens et la grandeur définis par le conducteur.

On précisera que les angles respectifs d'orientation des axes 24, 25, 26 et 27 des roues de bissel 3 sont définis par la géométrie de la timonerie de direction selon des rapports aux angles d'orientation des axes 21 et 22 des roues directrices 13 du tracteur 1 qui sont tels que la convergence de ces axes sur l'axe fixe 23 du pont ou du double pont arrière du tracteur 1, en un point fictif unique de rotation de l'ensemble des roues de tracteur et de bissel, assure le maintien de l'axe longitudinal 20 du bissel 3 sensiblement en alignement dans le prolongement de l'axe longitudinal 19 du tracteur 1.

Il est connu toutefois que les principes géométriques déterminant les valeurs respectives des angles de braquage pour les différentes roues d'un véhicule ne permettent pas une réalisation rigoureuse de la convergence de tous les axes de roues en un point unique de rotation. De ce fait l'alignement de l'axe longitudinal 20 du bissel dans le prolongement de l'axe longitudinal 19 du tracteur ne sera pas parfait, surtout pour des valeurs importantes de braquage des roues. On peut, dans certains cas, augmenter la précision en adjoignant de façon optionnelle, au dispositif de la figure 3, un système de limitation élastique de l'angle α de défaut d'alignement entre les axes 19 et 20.

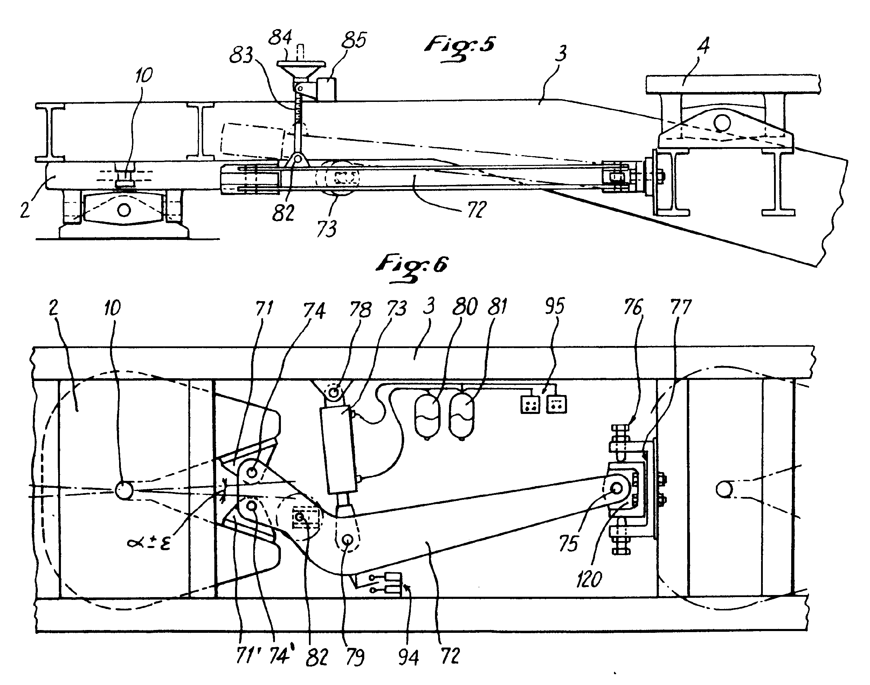

Un tel système de limitation élastique, représenté aux figures 5 et 6, comporte principalement des sabots 71 et 71′ venant s'engager dans l'ouverture d'entrée du coupleur d'attelage automatique 2. Ces sabots sont articulés au moyen d'axes 74 et 74′ sur l'extrémité avant d'un fléau 72 lui-même articulé au moyen d'un axe 75 sur un palier 120 solidaire du châssis de bissel 3. Il est avantageux que la position de ce palier d'articulation soit réglable latéralement par un dispositif 76 et longitudinalement par un dispositif 77 de cales d'épaisseur, par exemple, afin de bien régler la ligne médiane de l'alignement parfait.

Le fléau 72 est maintenu élastiquement en position médiane par un amortisseur à double effet 73 articulé en 79 sur le fléau 72 et en 78 sur le châssis de bissel 3. Cet amortisseur double effet, qui peut être de tous types convenables, mécaniques, pneumatiques ou hydrauliques, est représenté ici du type hydraulique comprenant un vérin à double effet dont les deux chambres sont reliées respectivement à des accus oléo-pneumatiques 80 et 81.

Le réglage de la pression du fluide élastique dans les accus 80 et 81 permet de régler la force de rappel en alignement. Des manostats 95 ou des détecteurs de position 94 permettent de déclencher une alarme d'effort limite, ou de défaut d'alignement limite, admissible. Pour fixer une grandeur la valeur maximum de l'angle α peut être de l'ordre de ± 3 à 5°.

L'ensemble du dispositif de limitation élastique peut être effacé par relevage au moyen d'un système à vis 83 fixée en 82 au fléau 72, avec un volant 84 monté sur un palier-moyeu 85. Cet effacement libère instantanément l'axe de rotation vertical 10 du bissel 3 autour du tracteur 1 et peut faciliter certaines opérations telles que l'accouplement ou le découplement du tracteur 1 sous le bissel 3 au moyen du coupleur automatique d'attelage 2.

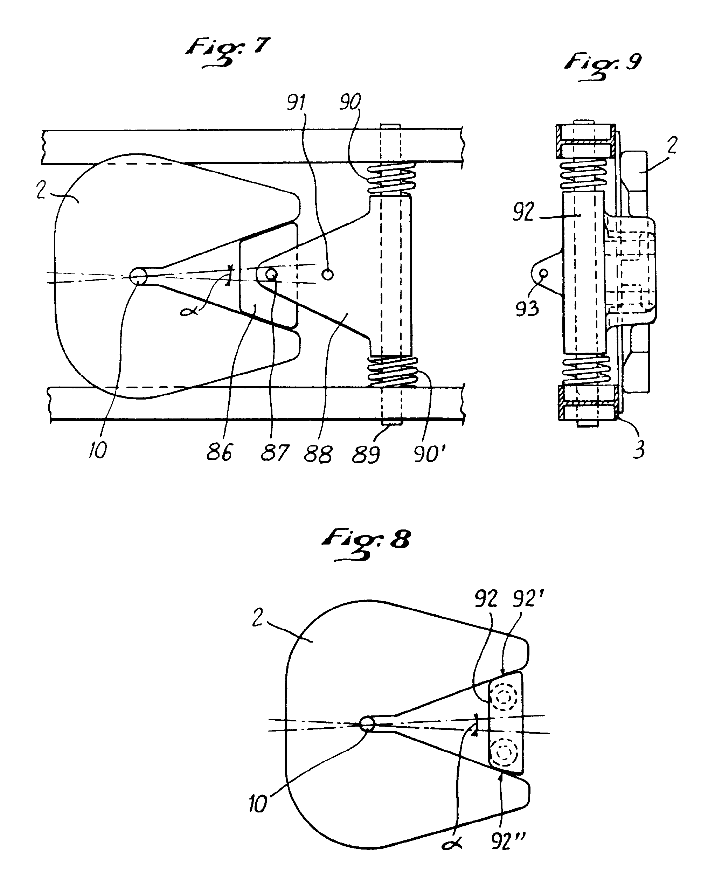

A la figure 7 on a représenté une variante, moins élaborée, du dispositif de limitation élastique qui comporte principalement un sabot 86 articulé par un axe 87 sur un bras 88 coulissant sur l'arbre 89 entre deux ressorts 90 et 90′ qui assurent la limitation élastique de rappel en alignement. Un système à vis et volant, tel que représenté aux figures 5 et 6, est fixé par une articulation en 91 et permet l'effacement par relevage. Aux figures 8 et 9, on a représenté une autre variante qui est conçue dans le même esprit que celle selon la figure 7 mais qui comporte deux sabots 92′ et 92″ articulés sur le bras 92, le tout étant effaçable par un système à vis et volant articulé au point 93.

La direction automatique des roues du bissel à partir des mouvements d'orientation des roues directrices du tracteur, telle que décrite à la figure 3, ne détecte pas l'angle résiduel de défaut d'alignement de l'axe longitudinal 20 du bissel dans le prolongement de l'axe longitudinal 19 du tracteur 1, ce défaut résultant des imperfections pratiques du système.

En effet alors qu'en marche avant cet angle de défaut d'alignement tend naturellement à s'annuler, du fait que le bissel 3 est tiré par le tracteur 1, en marche arrière le bissel 3 est poussé par le tracteur et l'angle de défaut d'alignement croît rapidement. Il est donc nécessaire d'adjoindre, au système représenté à la figure 3, un dispositif complémentaire ayant pour fonction de mesurer l'angle de défaut d'alignement et d'apporter la correction nécessaire, fonction de cette mesure, dans l'étage pilote de direction automatique des roues du bissel. A un instant donné cette correction peut être de même sens ou de sens inverse à la consigne générale d'orientation des roues du bissel, donnée par la position des roues de tracteur, selon que l'on est en marche avant ou en marche arrière.

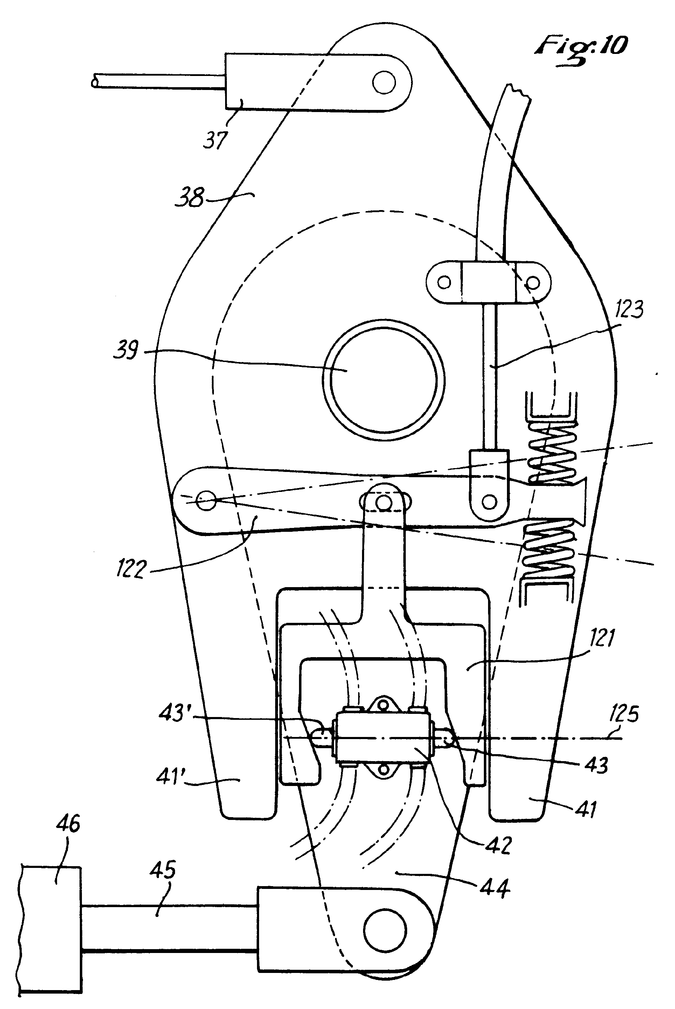

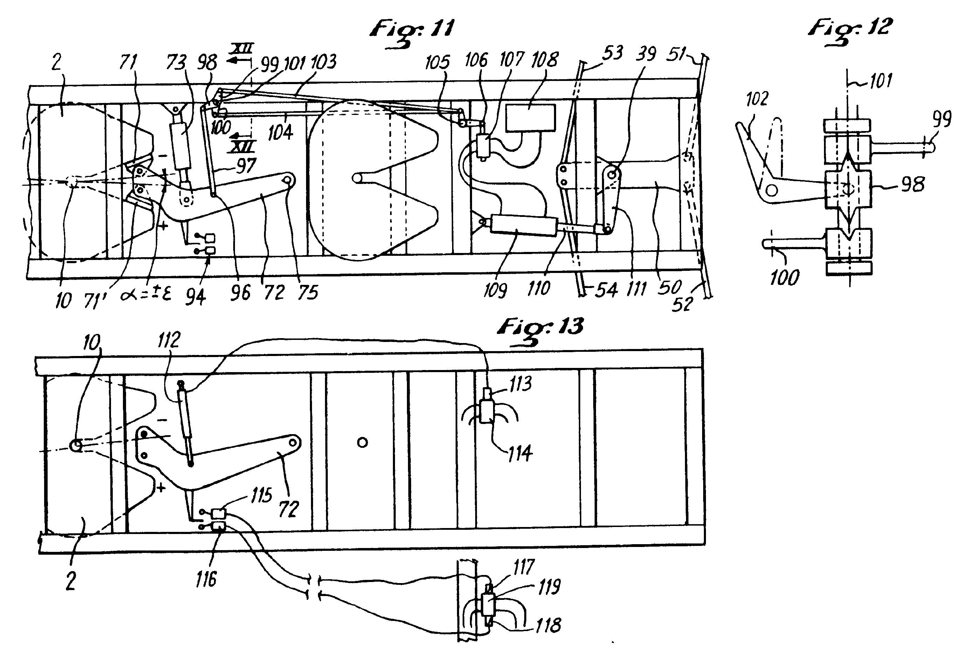

On prévoit alors d'adjoindre au dispositif selon la figure 3 un dispositif complémentaire représenté à la figure 10 et comprenant principalement une came double 121 coulissante, dont les deux bras sont insérés entre les poussoirs 43 et 43′ du distributeur progressif 42 et les doigts 41 et 41′ de la fourchette terminant la bielle pilote 38. La came double 121 est reliée à une bielle 122 elle-même reliée à la chape d'extrémité d'une tige d'acier flexible sous gaine 123. L'autre extrémité de la tige d'acier flexible est reliée à la bielle 99 du système de crabotage de la marche arrière représenté à la figure 11 et qui sera décrit plus en détail plus loin. La bielle 99 une fois embrayée par le moyen d'une commande 102 à une bielle 98 se trouve elle-même reliée par une tringle 97 à un organe mesurant l'angle α de défaut d'alignement entre l'axe longitudinal du tracteur et celui du bissel, cet organe étant dans l'exemple représenté le fléau de limitation élastique 72. L'ensemble mécanique tel que décrit transmet donc à la came double 121 les déplacements images du signe et de la grandeur de l'angle α de défaut d'alignement et la came 121 modifie l'action de la fourchette pilote principale 41-41′ sur les poussoirs 43 et 43′, de façon à réduire l'angle de défaut d'alignement α du bissel par rapport au tracteur, tout en maintenant l'ordre de grandeur de la consigne principale de braquage de la bielle pilote 38 reliée au levier 28 de la commande de direction 12 des roues 13 du tracteur 1.

En marche avant, généralement ce dispositif complémentaire selon la figure 10 est débrayé par une commande 102 représentée aux figures 11 et 12, et la came double 121 revient en position médiane 125 d'incidence nulle entre les poussoirs 43 et 43′ et les bras 41 et 41′ de la fourchette pilote principale.

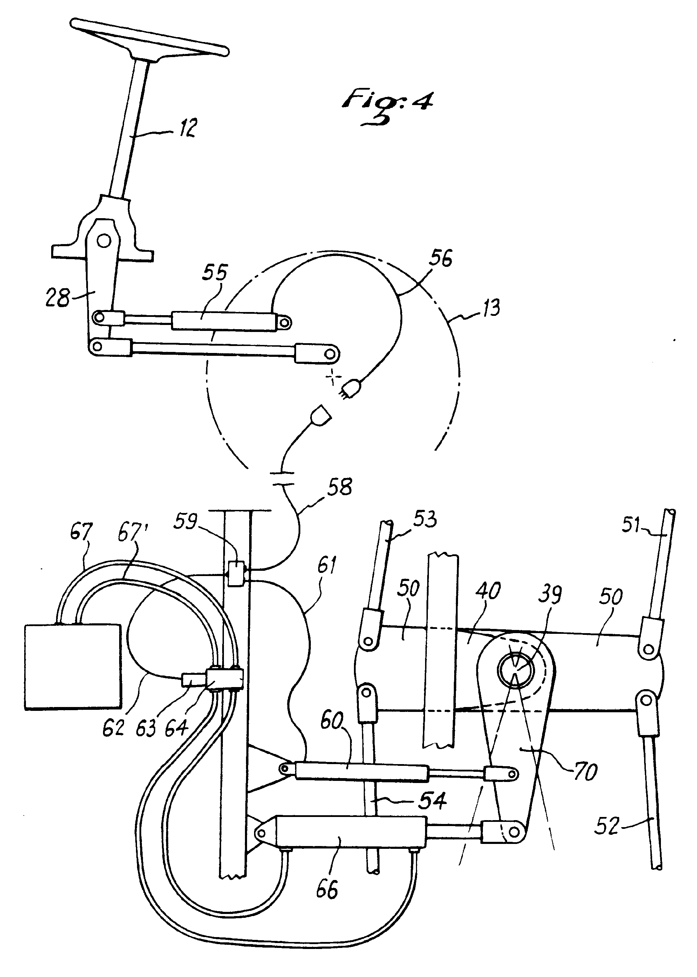

En référence à la figure 4, on a représenté une variante du dispositif de la figure 3 dans laquelle la transmission de l'information par l'étage pilote est réalisée différemment, par le moyen d'un signal modulé électrique fourni par un potentiomètre 55 et transmis par des câblages 56 et 58 jusqu'à l'opérateur de rapport 59. Un autre potentiomètre 60 calé sur la bielle force 70 envoie par le câblage 61, sur l'opérateur 59, le signal image du degré d'orientation des roues du bissel. L'opérateur 59 émet un signal correcteur proportionnel acheminé par le câblage 62 sur le solénoïde 63 d'une servo-valve 64 qui envoie le fluide hydraulique sous pression vers l'une ou l'autre face du piston du vérin d'actionnement 66. Le système fonctionne alors en suiveur, exactement comme décrit plus haut en référence à la figure 3.

Le maintien du bissel 3 en alignement derrière le tracteur 1, en marche arrière, peut être assuré par le moyen d'un troisième potentiomètre mesurant les déplacements d'un organe sensible à la variation de l'angle $\alpha$ de défaut d'alignement entre l'axe longitudinal du tracteur et celui du bissel (cet organe pouvant être par exemple le fléau de limitation élastique d'alignement 72 représenté aux figures 5 et 6) et envoyant son signal modulé sur l'opérateur de rapport 59 conçu pour additionner algébriquement ce troisième signal. Le fonctionnement de l'ensemble est alors semblable à celui décrit pour le dispositif selon la figure 10.

On comprendra que, sans sortir de l'invention, on pourrait utiliser tout autre mode connu de transmission de l'information entre le tracteur et le bissel, par exemple une transmission hydrostatique de très petites dimensions qui remplacerait les tiges d'acier flexibles sous gaines 31 et 36 représentées à la figure 3 ou une transmission pneumatique d'air sous pression modulée qui remplacerait le système potentiométrique représenté à la figure 4.

En référence maintenant aux figures 11 et 12, on a représenté une autre forme d'exécution du dispositif selon l'invention. Selon cette forme d'exécution, la commande de la direction des roues 16 et 17 du bissel s'effectue à partir de la détection des petits déplacements angulaires relatifs entre le bissel 3 et le tracteur 1 résultant de défauts d'alignement de l'axe longitudinal 20 du bissel 3 dans le prolongement de l'axe longitudinal 19 du tracteur 1. Le fonctionnement du dispositif est tel que, dès que le tracteur commence à braquer à droite ou à gauche, il se forme autour de l'axe vertical 10 un petit angle $\alpha$ entre l'axe longitudinal du tracteur et celui du bissel, c'est-à-dire que le coupleur 2 solidaire du tracteur 1 tourne légèrement autour du pivot 10 solidaire du bissel 3, ce petit angle $\alpha$ étant de signe (+) ou (-) selon que le tracteur commence à tourner à gauche ou à droite. Ce déplacement angulaire entraîne le déplacement du fléau 72 par l'intermédiaire des sabots 71 et 71'. Le mouvement du fléau 72 est à son tour transmis, par un ensemble de tringlerie constitué par une tige 97 ancrée en un point 96 sur le fléau, un système de bielles de renvoi 98 et 99 ou 100 articulées sur l'axe 101, une tige 103 ou une tige 104 et un système de bielles de renvoi 105, jusqu'à un tiroir 106 d'un distributeur hydraulique progressif 107 qui envoie l'huile sous pression, venant de la centrale de génération 108, dans l'une ou l'autre des deux chambres d'un vérin à double effet 109, selon le signe (+) ou (-) de l'angle $\alpha$. La tige 110 du vérin 109 rentre ou sort et déplace une bielle 111 calée sur l'arbre 39. Une bielle double 50 calée sur le même arbre 39 entraîne les barres de direction 51, 52, 53 et 54 des quatre roues de bissel. Cette orientation des roues de bissel a pour effet de ramener l'axe longitudinal 20 du bissel dans le prolongement de l'axe longitudinal 19 du tracteur. En effet, si le débit d'huile envoyé par le distributeur progressif était trop faible, l'angle $\alpha$ continuerait à croître ce qui aurait pour effet d'ouvrir davantage le distributeur progressif qui enverrait alors un débit plus important ; inversement dès que l'angle $\alpha$ diminue, le débit d'huile est réduit. Si l'angle $\alpha$ change de signe, le débit d'huile est inversé sur les deux chambres du vérin 109 et les roues du bissel seraient orientées en sens inverse.

Toutefois l'angle $\alpha$ étant par construction faible, les mouvements correcteurs correspondants qui s'exercent sur le tiroir 106 du distributeur 107 sont faibles et ne dépassent pas la course du tiroir. Mais le conducteur commande généralement la direction des roues avant 13 du tracteur 1 jusqu'à des valeurs d'angles très importantes qui font converger les axes de roues avant du tracteur sur un point de rotation commun située sur l'axe de roulement fixe 23 du pont arrière (ou des ponts arrières) du tracteur 1, assez proche du tracteur et qui exige donc que les axes de roulement des roues du bissel soient également braqués selon des angles importants (24, 25, 26 et 27) pour venir converger sur le point de rotation commun à toutes les roues. Il faut et il suffit alors, pour que le système fonctionne correctement c'est-à-dire pour qu'il suive la sollicitation du tracteur de s'inscrire dans une courbe de rayon réduit sans que l'angle de défaut d'alignement $\alpha$ dépasse à aucun moment la valeur limite de construction de l'ordre de ± 3 à 5°, que la capacité d'accroissement dans l'unité de temps du déplacement angulaire des axes de roues du bissel, elle-même définie par le débit instantané maximum du distributeur progressif 107, soit égale ou supérieure à l'accroissement de déplacement angulaire des axes de roues directrices du tracteur imposé par le conducteur du tracteur.

En cas de défaillance du système de direction des roues du bissel, l'angle $\alpha$ s'accroît et l'un ou l'autre des détecteurs de positions limites 94 délivre un signal d'alarme.

Dans le cas du braquage sur place du tracteur ce dernier, lorsqu'il avancera, devra se déplacer lentement pour permettre au système de direction des roues du bissel de braquer celles-ci suffisamment rapidement pour ne pas atteindre la valeur limite d'alarme de l'angle $\alpha$. Pour répondre à ce cas, la centrale de génération d'huile sous pression 108 pourrait comporter avantageusement un accumulateur oléo-pneumatique dont le débit instantané serait important.

Dans le cas de la marche arrière, il apparaît que le sens des angles à donner aux roues du bissel doit être inversé pour maintenir l'axe longitudinal 20 du bissel 3 sensiblement dans le prolongement de l'axe longitudinal 19 du tracteur 1. Pour ce faire un système de bielles de renvoi 98, 99 et 100, tournant autour de l'axe 101, permet à partir d'un effort de traction de la tringle 97 sur la bielle 98 d'obtenir soit un effort de traction sur la tringle 103 par le moyen de la bielle 99 crabotée par le levier 102 sur la bielle 98, soit un effort de compression sur la tringle 104 par le moyen de la bielle 100 crabotée par le levier 102 sur la bielle 98. Le sens de l'action sur le tiroir 106 du distributeur progressif 107 est alors inversé, ce qui inverse donc le débit d'huile sous pression d'une chambre de vérin 109 vers l'autre chambre et de ce fait inverse le sens de braquage des roues du bissel.

Le dispositif d'inversion décrit ci-dessus a été donné à titre d'exemple et on comprendra qu'on pourrait utiliser tout autre système convenable connu d'inversion d'un mouvement mécanique.

A la figure 13 on a représenté une simple variante du système de la figure 11, selon laquelle la transmission du mouvement du fléau 72 résultant de l'angle α de défaut d'alignement du bissel derrière le tracteur n'est plus faite mécaniquement, mais par l'envoi d'un signal électrique modulé émis par un potentiomètre 112 et envoyé sur un solénoïde 113 d'une servo-valve 114. La servo-valve 114 alimente l'une ou l'autre des deux chambres du vérin à double effet 109 dans les mêmes conditions que celles opérées par le distributeur progressif 107. Le système selon la figure 13 peut encore fonctionner par le moyen de deux contacts électriques 115 et 116 émettant des signaux "tout-ou-rien" c'est-à-dire signifiant ici "gauche-droite" envoyés sur les deux solénoïdes 117 et 118 de l'électro-valve hydraulique 119.

Dans le cas de marches arrière il est nécessaire comme on l'a expliqué plus haut pour le système selon la figure 11, d'inverser le sens de braquage des roues du bissel pour opérer la marche arrière. La réalisation de cette inversion s'opère ici par le moyen d'un appareil d'inversion de signes sur le signal modulé émis par le potentiomètre 112 ou par un contacteur-inverseur sur les deux signaux délivrés par les contacts électriques 115 et 116.

On comprendra que la description ci-dessus a été donnée à simple titre d'exemple, sans caractère limitatif, et que des adjonctions ou des modifications constructives pourraient y être apportées sans sortir du cadre de l'invention définie par les revendications annexées. On comprendra en particulier que le dispositif de limitation élastique de défaut d'alignement entre l'axe longitudinal du tracteur et celui du bissel ne constitue qu'un système accessoire dont l'utilisation n'est en rien obligatoire. Lorsque ce dispositif n'est pas utilisé, on comprend alors que la mesure de l'angle α de défaut d'alignement permettant de commander l'annulation de celui-ci lors du fonctionnement en marche arrière du dispositif de la figure 3 ou de la figure 4 peut alors être obtenue, au lieu du fléau 72, par tout organe convenablement disposé sensible au pivotement du tracteur par rapport au bissel.

## Revendications

1. Dispositif pour le renforcement de la capacité de chargement d'un véhicule tracteur pour recevoir une semi-remorque de transport de charges lourdes, comprenant une semi-remorque courte intermédiaire (3) à roues directrices (16, 17) appelée bissel dont la partie avant est attelée au véhicule tracteur (1) de façon à pivoter librement autour d'un axe vertical (10) et sur laquelle vient s'atteler à son tour, pour pivoter librement autour d'un axe vertical (11), la semi-remorque de transport (5, 6), caractérisé en ce qu'il comprend des moyens de commande automatique des roues (16, 17) du bissel qui agissent pour maintenir l'axe longitudinal (20) du bissel (3) sensiblement dans l'alignement de l'axe longitudinal (19) du tracteur (1), tant en ligne droite qu'en courbe et tant en marche avant qu'en marche arrière.

2. Dispositif selon la revendication 1, caractérisé en ce que les moyens de commande automatique des roues (16, 17) du bissel (3) comprennent un étage pilote détectant la grandeur du déplacement de direction des roues (13) du tracteur (1) et transmettant cette information à un système de force situé sur le bissel (3) et capable d'orienter les roues directrices (16, 17) de celui-ci.

3. Dispositif selon la revendication 2, caractérisé en ce que ledit étage pilote comprend une bielle pilote (38) tournant librement sur un arbre (39) monté pour tourner sur le châssis du bissel et actionnée en rotation à partir d'une transmission (31, 36) liée au levier (28) de la direction des roues (13) du tracteur, ladite bielle pilote (38) présentant une extrémité en fourchette (41, 41') coopérant avec les poussoirs de commande (43, 43') d'un distributeur hydraulique (42) relié aux deux chambres d'un vérin (46) à double effet, ledit distributeur (42) étant porté par une bielle de force (44) calée sur l'arbre (39) et à laquelle est attelée l'extrémité de la tige (45) dudit vérin (46), une bielle double (50) étant également calée sur l'arbre (39) et étant reliée à ses extrémités aux barres (51, 52, 53, 54) commandant l'orientation des roues (16, 17) du bissel, de façon que tout déplacement de la bielle pilote (38) commandé par la direction (12) des roues du tracteur entraîne un déplacement parallèle de la bielle de force (44).

4. Dispositif selon la revendication 3, caractérisé par une came double (121) disposée de façon coulissante entre les doigts (41, 41') en fourchette de la bielle pilote (38) et les poussoires (43, 43') du distributeur hydraulique (42), ladite came (121) étant reliée par l'intermédiaire d'une transmission (122, 123) à un levier oscillant (72) détectant l'angle (α) de défaut d'alignement entre l'axe longitudinal (19) du tracteur et celui (20) du bissel, ladite transmission (122, 123) n'étant mise en oeuvre que lors du fonctionnement en marche arrière.

5. Dispositif selon la revendication 2, caractérisé en ce que ledit étage pilote comprend un dispositif opérateur électrique (59) connecté d'une part à un potentiomètre (55) lié à la commande (12) de direction des roues de tracteur et d'autre part à un potentiomètre (60) lié à une bielle de force (70) calée sur un arbre (39) également solidaire d'une bielle double (50) reliée aux barres (51, 52, 53, 54) commandant l'"orientation des roues (16, 17) du bissel, pour recevoir des signaux modulés électriques images du degré d'orientation des roues (13) du tracteur et des roues (16, 17) du bissel, ledit opérateur (59) étant connecté à une servo-valve (64) pour lui fournir un signal correcteur commandant l'alimentation d'un vérin hydraulique double effet (66) agissant sur la bielle de force (70) pour corriger l'orientation des roues du bissel en fonction de l'orientation des roues du tracteur.

6. Dispositif selon la revendication 5, caractérisé par un potentiomètre supplémentaire qui mesure le déplacement angulaire d'un levier (72) proportionnel à l'angle (α) de défaut d'alignement entre l'axe longitudinal (19) du tracteur et celui (20) du bissel, ledit potentiomètre supplémentaire envoyant lors du fonctionnement en marche arrière son signal modulé sur l'opérateur de rapport (59) qui effectue la somme algébrique de ce signal et de ceux reçus des deux autres potentiomètres (55, 60).

7. Dispositif selon la revendication 1, caractérisé en ce que les moyens de commande automatique des roues (16, 17) du bissel comprennent un levier pivotant (72) porté par le bissel et coopérant avec le coupleur (2) solidaire du tracteur, ledit levier (72) étant relié par une tringlerie (97, 98, 103, 104, 105) au tiroir (106) d'un distributeur hydraulique (107) commandant sélectivement l'alimentation des deux chambres d'un vérin à double effet (109, 110) attelé à une bielle de force (111) calée sur un arbre (39) sur lequel est également calée une bielle double (50) reliée aux barres (51, 52, 53, 54) de commande de la direction des roues (16, 17) du bissel.

8. Dispositif selon la revendication 7, caractérisé par le fait que ladite tringlerie comprend un système inversant le sens d'actionnement du tiroir (106) du distributeur (107) lors du fonctionnement en marche arrière.

9. Dispositif selon la revendication 7, caractérisé en ce que la transmission du mouvement du levier pivotant (72) s'effectue au moyen d'un signal électrique modulé émis par un potentiomètre (112) lié audit levier (72), ledit signal étant envoyé à une servo-valve (114) alimentant sélectivement l'une ou l'autre chambre du vérin à double effet (109).

**Patentansprüche**

1. Schleppfahrwerksvorrichtung zur Steigerung des Ladevermögens von Zugfahrzeugen für die Aufnahme eines Schwertansport-Sattelaufliegers, die einen kurzen Zwischenaufliegen (3) mit Lenkrädern (16, 17), d. h. ein sogenanntes Lenkgestell unfaßt, dessen vorderer Teil so an die Zugmaschine (1) gekuppelt ist, daß es frei um eine vertikale Achse (10) schwenken und seinerseits den Transportauflieger (5, 6), um eine vertikale Achse (11) frei scwenkbar, aufnehmen kann, dadurch gekennzeichnet, daß sie Mittel zum automatischen Antrieb der Räder (16, 17) des Lenkgestells umfaßt, die im Sinne einer Erhaltung der Längsachse (20) des Lenkgestells (3) im wesentlichen in Ausrichtung zur Längsachse (19) der Zugmaschine (1) wirken, sowohl in gerader Linie als auch in Kurven, wie auch bei Vorwärts- und Rückwärtsfahrt.

2. Vorrichtung nach Anspruch 1, dadurch gekennzeichnet, daß die Mittel zum automatischen Antrieb der Räder (16, 17) des Lenkgestells (3) eine Führungsstufe umfassen, die die Größe der Richtungsverschiebung der Räder (13) der Zugmaschine (1) aufspürt und diese Information an ein Kraftsystem überträgt, das auf dem Lenkgestell (3) sitzt und dessen Lenkräder (16, 17) ausrichten kann.

3. Vorrichtung nach Anspruch 2, dadurch gekennzeichnet, daß die genannte Führungsstufe ein Führungsglied (38) umfaßt, das sich frei um eine Welle (39) dreht, die so montiert ist, daß sie sich am Fahrwerk des Lenkgestells drehen kann und in Drehung versetzt wird durch eine Übertragung (31, 36), die mit dem Lenkhebel (28) der Räder (13) der Zugmaschine verbunden ist, wobei das genannte Führungsglied (38) ein gabelförmiges Ende (41, 41') aufweist, das mit den Antriebstößeln (43, 43') eines mit den beiden Kam mern eines doppeltwirkenden Zylinders (46) verbundenen hydraulischen Verteilers (42) zusammenwirkt, wobei dieser Verteiler (42) durch ein auf die Welle (39) gekeiltes Kraftglied (44) getragen wird, an das das Ende der Kolbenstange (45) des Zylinders (46) gekuppelt ist, und wobei auf die Welle (39) auch ein Doppelglied gekeilt und an seinen Enden mit den Stäben (51, 52, 53, 54) zur Richtungssteuerung der Räder (16, 17) des Lenkgestells verbunden ist, so daß jede Verschiebung des durch die Lenkung (12) der Zugmaschinenräder betätigten Führungsglieds (38) eine Parallelverschiebung des Kraftglieds (44) bewirkt.

4. Vorrichtung nach Anspruch 3, dadurch gekennzeichnet durch eine Doppelkurvenscheibe (121), die gleitend zwischen den Gabelzinken (41, 41') des Führungsglieds (38) und den Stößeln (43, 43') des hydraulischen Verteilers (42) angeordnet und mittels einer Übertragung (122, 123) mit einem Schwinghebel (72) verbunden ist, der den Ausrichtungsfehlerwinkel (α) zwischen der Längsachse (19) der Zugmaschine und der (20) des Lenkgestells erfaßt, wobei die genannte Übertragung (122, 123) nur bei Rückwärtsfahrt in Aktion tritt.

5. Vorrichtung nach Anspruch 2, dadurch gekennzeichnet, daß die genannte Führungsstufe eine elektrische Stellvorrichtung (59) umfaßt, die einerseits an ein mit dem Lenkantrieb (12) der Zugfahrzeugräder verbundenes Potentiometer (55) und andererseits an ein Potentiometer (60) angeschlossen ist, das Verbindung mit einem Lraftglied (70) hat, welches auf eine Welle (39) gekeilt ist, die auch fest verbunden ist mit einem Doppelglied (50) mit Verbindung zu den Stäben (51, 52, 53, 54) zum Beeinflussen der Ausrichtung der Räder (16, 17) des Lenkgestells, damit modulierte elektrische Bildsignale des Ausrichtungsgrads der Räder (13) der Zugmaschine und der Räder (16, 17) des Lenkgestells empfangen werden, wobei die Stellvorrichtung (59) an ein Servoventil (64) zwecks Lieferung eines Korrektursignals angeschlossen ist, das die Beschickung eines doppeltwirkenden Hydraulikzylinders (66) steuert, der auf Kraftglied (70) wirkt, um die Ausrichtung der Räder des Lenkgestells in Abhängigkeit von der Ausrichtung der Zugmaschinenräder zu berichtigen.

6. Vorrichtung nach Anspruch 5, gekennzeichnet durch ein zusätzliches Potentiometer, das die Winkelverschiebung eines Hebels (72) proportional zum Ausrichtungsfehlerwinkel (α) zwischen der Längsachse (19) der Zugmaschine und der (20) des Lenkgestells mißt und bei Rückwärtsfahrt sein moduliertes Signal an die Proportional-Stellvorrichtung (59) schickt, die die algebraische Summe dieses Signals und der von den beiden anderen Potentiometern (55, 60) empfangenen Signale durchführt.

7. Vorrichtung nach Anspruch 1, dadurch gekennzeichnet, daß die Mittel automatischen Antrieb der Räder (16, 17) des Lenkgestells einen Schwenkhebel (72) umfassen, der vom Lenkgestell getragen wird und mit der Kupplung (2), die mit der Zugmaschine fest verbunden ist, zusammenwirkt, wobei der Hebel (72) über ein Gestänge (97, 98, 103, 104, 105) mit dem Schieber (106) eines hydraulischen Verteilers (107) verbunden ist, der selektiv die Beschickung der beiden Kammern eines doppeltwirkenden Zylinders (109, 110) steuert, der an ein auf eine Welle (39) gekeiltes Kraftglied (111) gekuppelt ist, wobei diese Welle auch ein aufgekeiltes Doppelglied (50) aufweist, das mit den Lenkantriebsstäben (51, 52, 53, 54) der Räder (16, 17) des Lenkgestells verbunden ist.

8. Vorrichtung nach Anspruch 7, dadurch gekennzeichnet, daß das genannte Gestänge ein System zur Umkehr des Betätigungssinnes des Schiebers (106) des Verteilers (107) bei Rückwärtsfahrt hat.

9. Vorrichtung nach Anspruch 7, dadurch gekennzeichnet, daß die Übertragung der Bewegung des Schwenkhebels (72) mittels eines emulierten elektrischen Signals erfolgt, das von einem mit dem genanntern Hebel (72) verbundenen Potentiometer (112) ausgesandt wird, wobei dieses Signal an ein Servoventil (114) gelangt, das selektiv die eine oder andere Kammer des doppeltwirkenden Zylinders (109) beschickt.

## Claims

1. Device for reinforcing the loading capacity of a tractor vehicle to receive a trailer for transporting heavy loads, comprising a short intermediate trailer (3) with driving wheels (16, 17) which is called a bissel, the front part of which is coupled to the tractor vehicle (1) in such a way as to pivot freely about a vertical axis (10), and onto which the transport trailer (5, 6) is in turn coupled so as to pivot freely about a vertical axis (11), characterised in that it comprises means for automatic control of the wheels (16, 17) of the bissel which act to maintain the longitudinal axis (20) of the bissel (3) substantially in alignment with the longitudinal axis (19) of the tractor (1) both in a straight line and in a curve and both in forward motion and when reversing.

2. Device as claimed in claim 1, characterised in that the means for automatic control of the wheels (16, 17) of the bissel (3) comprise a pilot stage which detects the magnitude of the change of direction of the wheels (13) of the tractor (1) and transmits this information to a force system situated on the bissel (3) and capable of orienting the driving wheels (16, 17) of the latter.

3. Device as claimed in claim 2, characterised in that the said pilot stage comprises a pilot rod (38) which turns freely on a shaft (39) mounted so as to turn on the chassis of the bissel and actuated in rotation from a transmission (31, 36) connected to the lever (28) for directing the wheels (13) of the tractor, the said pilot rod (38) having one end forked (41, 41') and co-operating with the control push rods (43, 43') of a hydraulic distributor (42) linked to the two chambers of a double-action jack (46), the said distributor (42) being borne by a force rod (44) fixed on the shaft (39) and to which the end of the stem (45) of the said jack (46) is coupled, a double rod (50) also being fixed on the shaft (39) and being linked at its ends to the bars (51, 52, 53, 54) which control the orientation of the wheels (16, 17) of the bissel, in such a way that any displacement of the pilot rod (38) controlled by the steering (12) of the wheels of the tractor brings about a parallel displacement of the force rod (44).

4. Device as claimed in claim 3, characterised by a two-lobe cam (121) arranged in a sliding manner between thefingers (41, 41′) of the forked pilot rod (38) and the pushers (43, 43′) of the hydraulic distributor (42), the said cam (121) being connected by means of a transmission (122, 123) to a rocking lever (72) which detects the angle ($\alpha$) by which the longitudinal axis (19) of the tractor is out of alignment with that (20) of the bissel, the said transmission (122, 123) only being put into effect during reversing.

5. Device as claimed in claim 2, characterised in that the said pilot stage comprises an electrical operating device (59) connected on the one hand to a potentiometer (55) connected to the steering control (12) for the tractor wheels and on the other hand to a potentiometer (60) connected to a force rod (70) fixed on a shaft (39) which is also integral with a double rod (50) linked to the bars (51, 52, 53, 54) which control the orientation of the wheels (13) of the tractor and of the wheels (16, 17) of the bissel, in order to receive modulated electrical signals providing images of the degree of orientation of the wheels (13) of the tractor and of the wheels (16, 17) of the bissel, the said operator (59) being connected to a servo-valve (64) in order to supply it with a correcting signal controlling the feed of a double-action hydraulic jack (66) which acts on the force rod (70) to correct the orientation of the wheels of the bissel as a function of the orientation of the wheels of the tractor.

6. Device ae claimed in claim 5, characterised by a supplementary potentiometer which measures the angular displacement of a lever (72) proportional to the angle ($\alpha$) by which the longitudinal axis (19) of the tractor is out of alignment with that (20) of the bissel, and during reversing the said supplementary potentiometer sends its modulated signal over the ratio operator (59) which works out the algebraic sum of this signal and of those received from the two other potentiometers (55, 60).

7. Device as claimed in claim 1, characterised in that the means for automatic control of the wheels (16, 17) of the bissel comprise a pivoting lever (72) borne by the bissel and co-operating with the coupler (2) which is integral with the tractor, the said lever (72) being connected by a linkage (97, 98, 103, 104, 105) to the slide (106) of a hydraulic distributor (107) which selectively controls the feed of the two chambers of a double-action jack (109, 110) coupled to a force rod (111) fixed on a shaft (39) on which is also fixed a double rod (50) connected to the bars (51, 52, 53, 54) for controlling the direction of the wheels (16, 17) of the bissel.

8. Device as claimed in claim 7, characterised in that the said linkage comprises a system which reverses the direction of actuation of the slide (106) of the distribut or (107) during reversing.

9. Device as claimed in claim 7, characterised in that the transmission of the movement of the pivoting lever (72) is effected by means of a modulated electrical signal emitted by a potentiometer (112) connected to the said lever (72), the said signal being sent to a servo-valve (114) which selectively feeds one or the other chamber of the double-action jack (109).

Fig.1

Fig.2

Fig.3

*Fig:4*

Fig. 5

Fig. 6

EP 0 320 383 B1

Fig. 7

Fig. 9

Fig. 8

Fig.10

37

38

39

123

122

121

125

43'

43

41'

41

42

44

46

45

Fig. 11  Fig. 12  Fig. 13